# EUROPEAN PATENT SPECIFICATION

(11) **EP 4 035 856 B1**
(45) Date of publication and mention of the grant of the patent: **12.02.2025**
(21) Application number: 21179863.2
(22) Date of filing: 16.06.2021
(51) Int. Cl.: B28B 1/00, B29C 64/106, B29C 64/336, B29C 64/40, B33Y 10/00, B33Y 30/00, B33Y 40/20, C04B 33/24, C04B 33/30, C04B 33/34

(54) **PROCESS FOR MANUFACTURING CERAMIC COMPONENTS ACCOMPANIED BY CALCIUM CARBONATE BASED SUPPORTS**
VERFAHREN DER GENERATIVEN FERTIGUNG ZUR HERSTELLUNG VON KERAMIKKOMPONENTEN MIT AUF CALCIUMCARBONAT BASIERENDEN TRÄGERN
PROCÉDÉ DE FABRICATION DE COMPOSANTS EN CÉRAMIQUE ACCOMPAGNÉS DE SUPPORTS À BASE DE CARBONATE DE CALCIUM

(30) Priority: 29.01.2021 PT 2021117036
(43) Date of publication of application: 03.08.2022
(73) Proprietor: Instituto Politécnico De Leiria, 2411-901 Leiria (PT)
(72) Inventor: DOS SANTOS MATEUS, ARTUR JORGE, 2400-187 LEIRIA (PT); DE JESUS GOUVEIA, LILIANA ANDREIA, 3400-117 OLIVEIRA DO HOSPITAL (PT); COUCEIRO BAROSA CORREIA FRADE, JOSÉ MANUEL, 2430-521 MARINHA GRANDE (PT); SANTANA DE OLIVEIRA, LUIS MIGUEL, 2410-485 LEIRIA (PT); MENDES GASPAR, FLORINDO JOSÉ, 2410-252 LEIRIA (PT)
(74) Representative: Monteiro Alves, Inês

(56) References cited:
- EP-A1- 3 156 231
- CN-A- 109 016 070
- US-A1- 2002 167 101
- US-A1- 2018 243 941
- US-B2- 10 894 289

## Description

### TECHNICAL FIELD

The present invention refers to an additive manufacturing process by means of the manufacture of green ceramic objects by means of extrusion injection of materials with subsequent drying and calcination or firing to produce ceramic objects.

### BACKGROUND ART

The ceramic markets have registered significant alterations in their productive paradigms. Thus of bridging creative limits imposed by the traditional manufacturing methodologies is the recourse to direct additive manufacturing. This technology allows, by means of the addition of material in successive planar layers, to manufacture three-dimensional physical components, from the information obtained directly from the geometrical models generated in a computer system, wherein the process occurs in a quick, automated and totally flexible manner.

The automated manufacturing is a process for the creation of three-dimensional objects from a digital model, for example in CAD (*computer aided design*), which is converted into stl language (*standard triangulation language*) and subsequently divided in layers by slicing algorithm, thus creating detailed information about each transverse slice.

The creation of a printed component is carried out, by means of additive processes, wherein the object is created by a chain of successive layers of material until the product is complete, where the successive layers of raw material can be in the form of pastes or powders. Each one of these layers can be seen as a horizontal transverse section in thin slices. Additionally, the three-dimensional printer technology (3DP) can be based on *"drop on demand"* systems, whereby these printers use a printer head with hundreds of perforations which pour thousands of binder droplets per second. The three-dimensional printer machine begins the process of construction of the piece by depositing a layer of powder, over which the binder will be deposited in the geometry of the section of the piece. The powder layer is then lowered, and a new layer of powder is deposited over the first one and the binder is once again deposited, making up the next slice of the model which is consolidated with the previous one by means of the binder. This process is repeated for all the layers of the piece until it is printed. In case the raw materials of the successive layers are in powder form, once the piece has been totally printed, the powder which has not come into contact with the binder is removed, the piece is then cleaned and the prototype is consolidated.

### TECHNICAL PROBLEMS

In the additive manufacturing of ceramic materials or other malleable materials, which do not harden rapidly, in certain practical conditions it is necessary to use supports, which hold the printed paste. The need for the supports is more evident for the objects with complex shapes, where the paste does not sustain itself during the three-dimensional printing, there being the risk of collapse or deformation of the printed layers. As seen in figure 12, the ceramic layers of a piece with a relatively complex shape in a determined region can collapse, if they are not adequately upheld. In order to avoid the collapse, supports are molded, which also are prepared by additive manufacture, as seen in figures 13 and 14, where the support corresponds to the material in layers placed on the periphery of a central ceramic object.

Chinese patent application CN109016070A, of Zhao et al, which was published on December 18, 2018, discloses an extrusion ceramic 3D printer, which adopts a fine printing nozzle and a coarse printing nozzle to cooperate for printing. The extrusion ceramic 3D printer is further configured to add a stacked layer by layer support structure for the printing process.

North-American patent application US 2002/167101 A1, of Tochimoto Shigeaki et al, which was published on November 14, 2002, discloses a three-dimensional object molding apparatus and method, especially for manufacturing an intended 3D molded product by jetting materials such as resins in a fluid or liquid state for example in an ink jet system and curing and laminating them in layers.

North-American patent US10059031B1, of Benjamin Demuth and Adam Pawloski, which was published on August 28, 2018, discloses an additive manufacturing process which uses composite supports made from a powder form polymeric matrix and pre-ceramic powders. The supports that are disclosed in this document from the state of the art allow the suitable stability of a green ceramic object, however, it is necessary to include a step for solubilization of the support after the drying and firing steps. In this manner, this process of the state of the art has the first disadvantage related to the use of polymeric resins which raise costs in the production of ceramic objects and the second disadvantage of requiring an additional step of support solubilization after the calcination or firing.

European patent application EP 3156231 A1, of Okamoto Eiji et al, which was published on April 19, 2017, relates to a flowable composition set including a flowable composition containing constituent material particles of a three-dimensionally shaped article and a flowable composition containing support section forming particles for forming a support section which supports the three-dimensionally shaped article when forming the three-dimensionally shaped article, wherein the sintering temperature of the support section forming particles is higher than the sintering temperature of the constituent material particles.

North-American patent US 10894289 B2, of Ishida Masaya et al, published on January 19, 2021, discloses a manufacturing method for three-dimensional structure having a layer forming step of supplying a flowable composition containing a powder and an organic material to form a unit layer, an organic material removing step of performing a treatment of removing the organic material on the unit layer, and an energy applying step of applying energy to the unit layer after the organic material removing step to form a molten layer or sintered layer, wherein the layer forming step, the organic material removing step, and the energy applying step are repeated with respect to the molten layer or sintered layer in a stacking direction as appropriate.

Thus, the prior art does not allow the practical separation of the supports in the ceramic components prepared by additive manufacturing, there being necessary specific operations for the separation of the support material from the primary ceramic piece, making the separation of the ceramic support material to be complex or unfeasible, and may also result in deformation of the final piece.

### SUMMARY OF INVENTION

The present invention is defined by the claims. Any subject-matter falling outside the scope of the claims is provided for information purposes only.

The present invention refers to a process that uses an additive manufacturing system (1) configured for the manufacture of ceramic components accompanied by supports, wherein the additive manufacturing system (1) comprises a plurality of recipients for extrusion materials (14, 17), subsystems for transfer of materials for extrusion (13,16), subsystems for dosage of materials for extrusion (12,15), a subsystem for injection of materials by extrusion (2), a printer table (5) and a processing and control computer unit (18) wherein:
the subsystem for injection of materials by extrusion (2) comprises a first
extrusion injection head (3) and a second extrusion injection head (4); wherein the first extrusion injection head (3) is configured to be supplied with at least one ceramic material (6) by means of a subsystem for dosage of ceramic material (12); wherein the ceramic material (6) is transferred from a recipient for ceramic material (14) to the subsystem for dosage of ceramic material (12) by means of a subsystem for transfer of ceramic material (13);

wherein the second extrusion injection head (4) is configured to be supplied with a calcium carbonate based support material (15);
wherein the calcium carbonate based support material (7) is transferred from a recipient for calcium carbonate based support material (17) to a subsystem for dosage of calcium carbonate based support (15) by means of a subsystem for transfer of calcium carbonate based support material (16);
wherein the processing and control computer unit (18) processes and controls the additive manufacture instructions according to a digital model of a ceramic component to be manufactured, to process and control the deposition of a plurality of ceramic material layers (8) and of a plurality of layers of calcium carbonate based support material (9); and wherein the processing and control computer unit (18) processes and controls the relative movement of the printer table (5) in relation to the subsystem for injection of materials by extrusion (2).

Thus, the present invention refers, in a first aspect, to a process for the additive manufacture of a ceramic object (10), which uses the additive manufacturing system (1) as described above, and comprises the following steps:
i. Feeding of a first extrusion injection head (3) with at least one ceramic material (6);
ii. Feeding of a second extrusion injection head (4) with a calcium carbonate based support material (7);
iii. Deposition of a plurality of layers of ceramic material (8) and of a plurality of layers of calcium carbonate based support material (9) to form a green ceramic obj ect;
iv. Drying of the green ceramic object;
v. Calcination or firing of the dry ceramic object, provided that the step of calcination or firing of the dry ceramic object occurs in three levels, wherein the first level is a quartz inversion which occurs at around 573 °C and the quartz crystals go from the alpha phase to the beta phase, and wherein the second level is a Bisque or Biscuit phase, which occurs at a maximum temperature between 985 °C and 1038 °C, and wherein the third level is a Glaze Firing or burning maturation, whereby in this level the glaze transformation takes place;
vi. Cooling of the calcined or cooked ceramic object with the self-separation of the ceramic object (10) and of the calcium carbonate based support material (11).

### SOLUTION TO PROBLEM

The present invention solves the problems of the state of the art related to the difficulty of the incorporation of supports in the ceramic components prepared by additive manufacture by means of the joint deposition of layers of ceramic material and of layers of calcium carbonate based support material. In this sense after the production of the green ceramic object, this is submitted to a drying step and a subsequent calcination or firing step. During the cooling of the calcined ceramic object, the ceramic object suffers a self-separation from the calcium carbonate based support.

### ADVANTAGEOUS EFFECTS OF INVENTION

The additive manufacturing process of the invention contribute to the embodiment of stable ceramic objects, by means of the additive manufacture by joint deposition of layers of ceramic materials and layers of calcium carbonate based support material. After obtaining the green ceramic object, during the steps of drying and calcination or firing, the referred calcium carbonate based supports accompany the change of state of shape of the ceramic material, even when the referred steps are carried out at temperatures in the order 1500°C, that are typically used in the calcination or firing step. In a surprising manner, after the cooling of the calcined ceramic object, it occurs the self-separation of the ceramic object from the calcium carbonate based support. When the temperature is around 600°C, it occurs the release of carbon dioxide, resulting from the transformation of the limestone into lime. In this manner, the support composition loses mass and, consequently, the capacity thereof to aggregate, resulting in the self-disaggregation of the support during the cooling.

The additive manufacture process of the present invention propitiate the automated production, by extrusion and layer by layer, of ceramic objects, optionally prepared from several ceramic materials and with countless combinations of colors and shapes, given that the device operator can define and control the most suitable operational conditions in each specific production.

Therefore, with the additive manufacture process of the present invention, it is possible to produce customized pieces and with great freedom in geometries in a short time and with perfectly acceptable costs due to the drastic reduction in labor, whereby just one operator may be required for the execution. Further, the present invention contributes with the elimination of molds and the energy wastes that are associated to the industry, which constitutes a highly competitive advantage relative to the current conventional processes that are traditionally used. The advantages mentioned manifest in obtaining useful objects and, primarily, in the production of objects for final use. With the present invention, new creative horizons are opened to manufacturers and designers, allowing the massification of the customization of the ceramic objects produced.

In summary, the additive manufacture process of the present invention allow obtaining countless shapes, since the device operator can define and control the most suitable operational conditions for each specific production. The present invention solves problems related to the high labor costs; the long times associated to the manufacture of the molds; the high waste of raw materials and, consequently, energy; the lack of differentiation of the products; the unfeasibility of the production of small series of products and the lack of automation of the production processes.

Thus, the present invention is prepared for the main challenges of the industry in the sense of modernization and social and economic balance, considering the current conventional processes and that are traditionally used. Furthermore, considering that the known production techniques by additive manufacture with ceramic materials still do not allow the incorporation of supports to the objects, the present invention contributes with an advantage, primarily in the production of objects for final use opening new creative horizons to the designers and manufacturers, allowing the massification of the customization.

The use of a calcium carbonate based support material also contributes to the solutions that consider the use of residues comprising this material, which cause a significant social impact in the transformation of the natural stone. The present invention propitiates a solution with the use of calcium carbonate based residues, in the form of a paste and stone powder in a continuous additive manufacture process. Consequently, the calcium carbonate based residues take on the character of a subproduct, contributing to reduce the volume of residues by means of the incorporation thereof in objects prepared by additive manufacture and with added value.

### BRIEF DESCRIPTION OF DRAWINGS

With the purpose of providing an understanding of the principles according to the embodiments of the present invention, reference will be made to the embodiments illustrated in the figures and to the terminology used to describe them. In any case, it must be understood that there is no intention of limiting the scope of the present invention to the content of the figures. Any subsequent alterations or modifications of the inventive characteristics shown herein, as well as any additional applications of the principles and embodiments of the invention shown, which would occur normally to a person skilled in the art having this description in hands, are considered as being within the scope of the claimed invention.

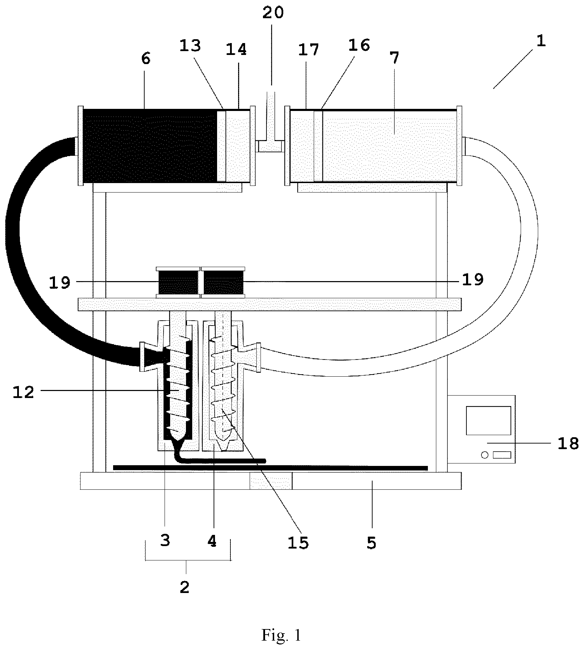

Figure 1 - illustrates a schematic representation of the additive manufacture system;

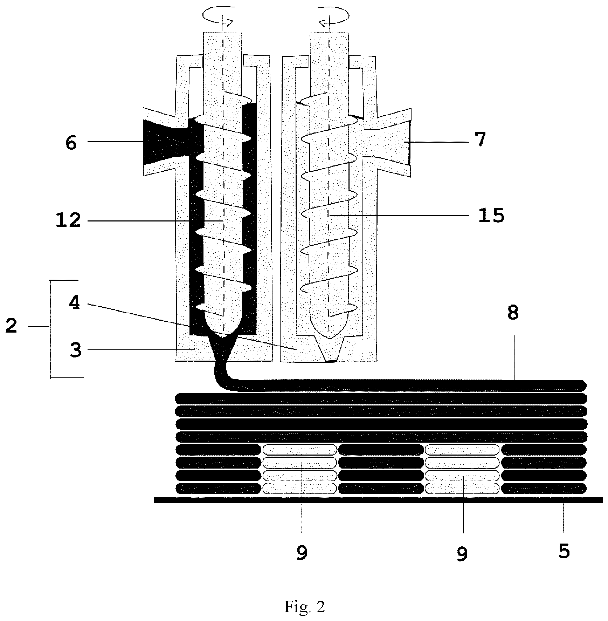

Figure 2 - illustrates an additive manufacture device with the system of injection of materials and a printer table which move in a related manner;

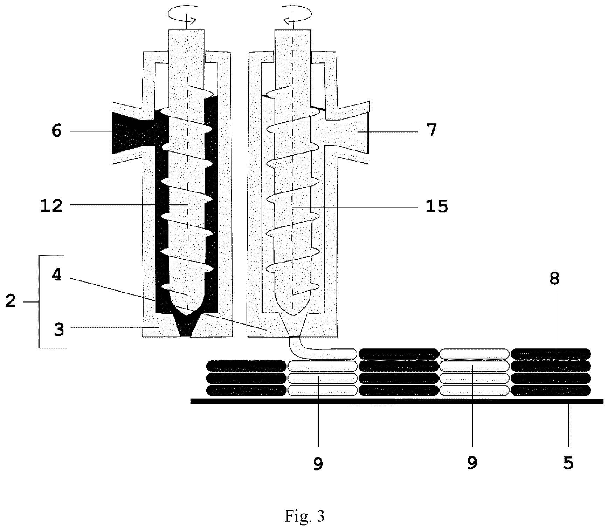

Figure 3 - illustrates an additive manufacture process according to the invention applying layers of materials, according to the instruction from a slicing algorithm;

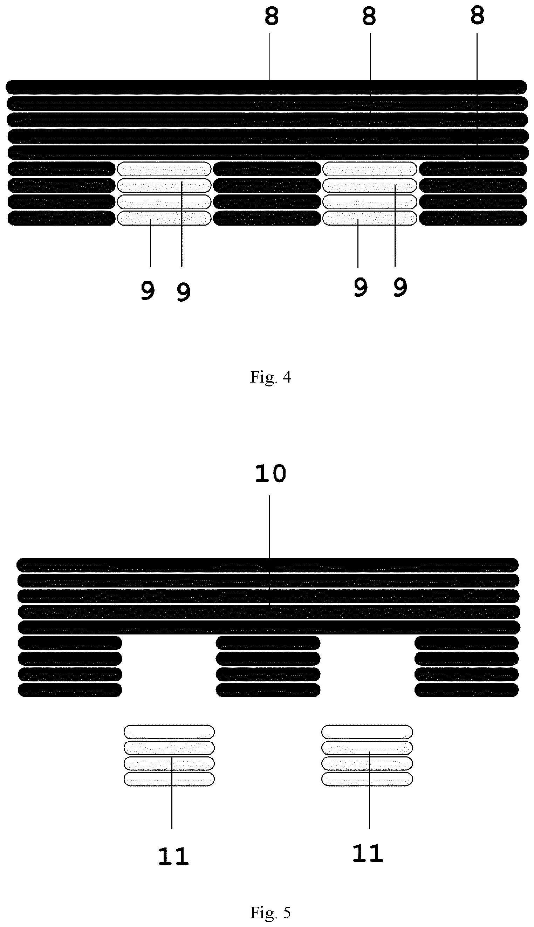

Figure 4 - illustrates an intermediary product of an additive manufacture process prior to the submission to the steps of drying and calcination/firing;
Figure 5 - illustrates the self-disaggregation of the support material, obtaining a ceramic object;

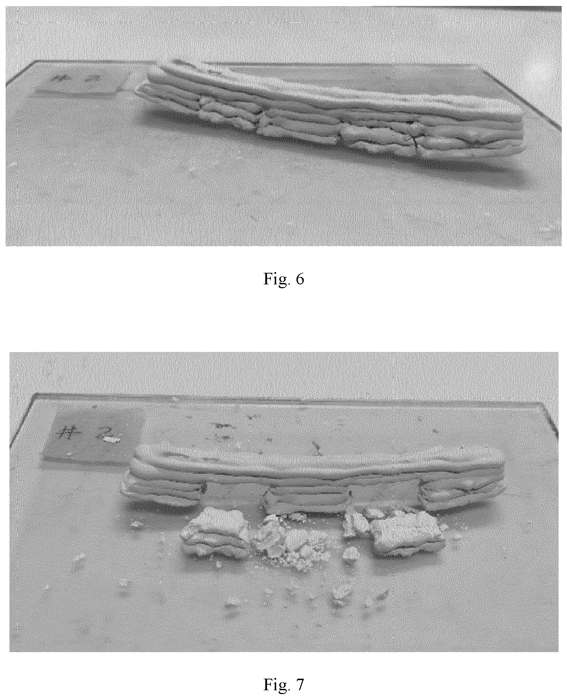

Figure 6 - illustrates a ceramic object in the cooling phase at around 200°C wherein the calcium carbonate based support is still connected to the ceramic material;
Figure 7 - illustrates a ceramic object in the cooling phase at room temperature wherein the calcium carbonate based support self-disaggregates, separating from the ceramic material;

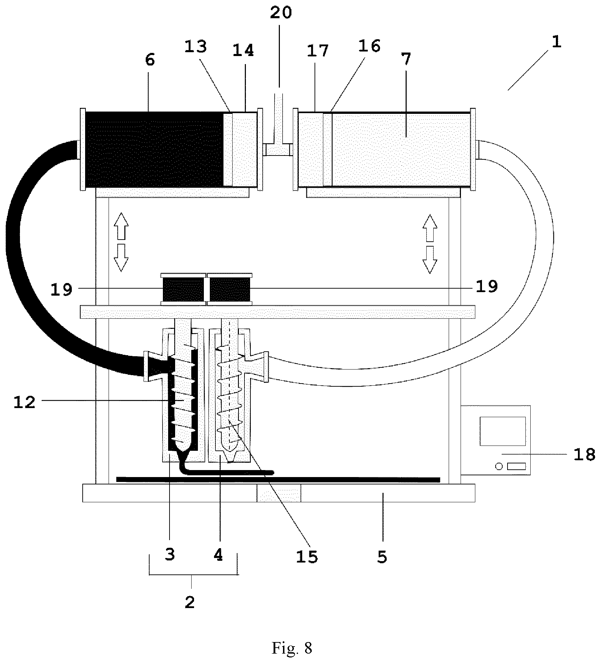

Figure 8 - illustrates a three-dimensional printer conducted by directions throughout a cartesian coordinates system;

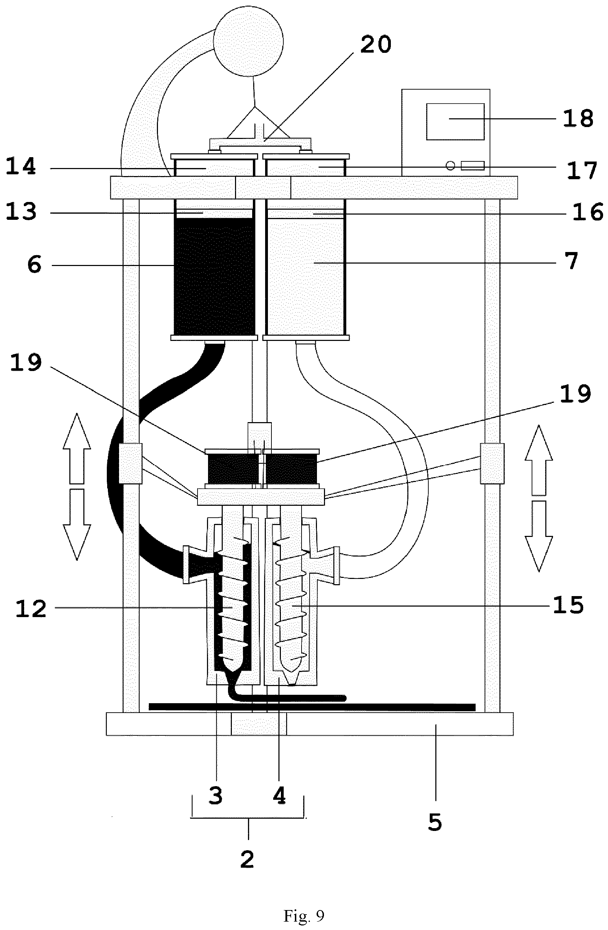

Figure 9 - illustrates a three-dimensional printer conducted by directions throughout a delta system;

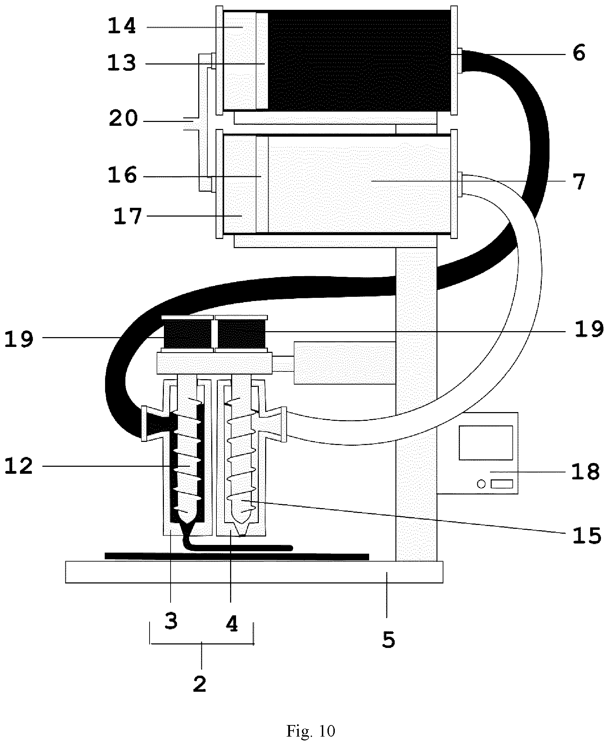

Figure 10 - illustrates a three-dimensional printer conducted by directions throughout a polar coordinates system;

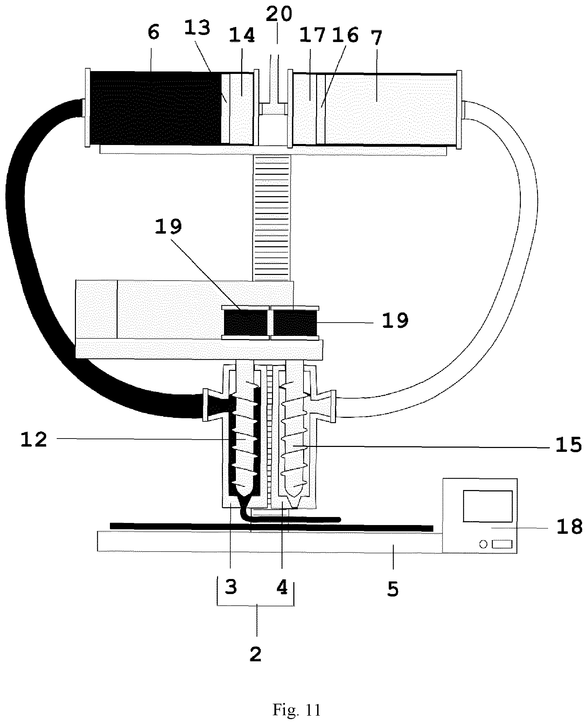

Figure 11 - illustrates a three-dimensional printer conducted by directions throughout a SCARA system;

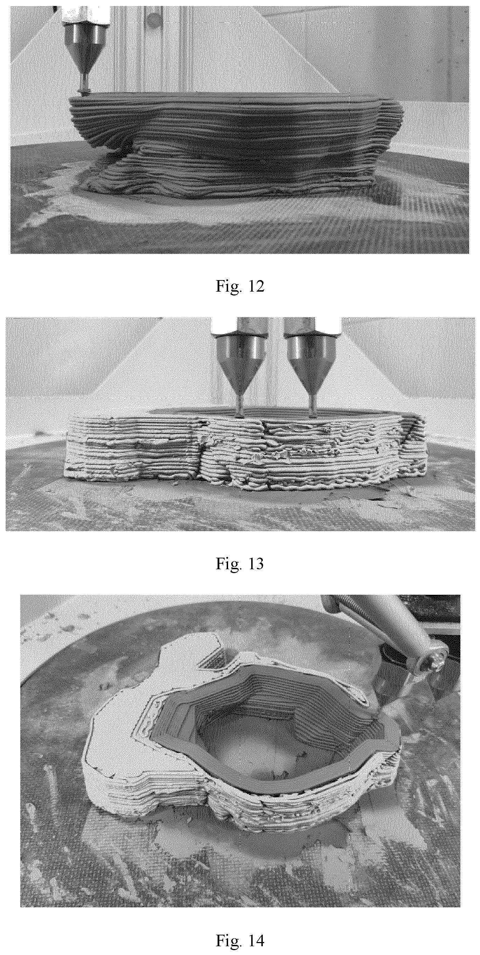

Figure 12 - illustrates a ceramic object prepared by additive manufacture without supports;
Figure 13 - illustrates a side view of a ceramic object prepared by additive manufacture with supports;
Figure 14 - illustrates a perspective view of a ceramic object prepared by additive manufacture with supports.

### DESCRIPTION OF EMBODIMENTS

The present invention refers to an additive manufacture process for producing ceramic objects (10), wherein the ceramic object (10) produced comprises supports in layers, whereby the layers of the supports prepared from a calcium carbonate based support material, in the form of paste or powder, by means of an integrated additive manufacture system. Thus, the present invention refers to the production of ceramic pieces, which are accompanied by at least one calcium carbonated based support.

The present invention is aimed primarily to the additive manufacture techniques with ceramic materials, whereby the additive manufacture system (1) counts on the implementation of one more compartment for printer the supports in the production of the ceramic components. In this manner, the additive manufacture system (1) comprises a subsystem for extrusion injection of materials (2) adapted to apply a ceramic material (6) together or in parallel with a calcium carbonate based support material (7), whereby the feeding mode of the two printer materials are similar, being admissible raw materials in the form of paste or powder.

As illustrated in figures 1 and 8 to 11, the additive manufacture system (1) includes a subsystem for injection of materials by extrusion (2), which comprises a first extrusion injection head (3) and a second extrusion injection head (4), whereby the first extrusion injection head (3) is configured to be supplied with at least a ceramic material (6) by means of a subsystem for dosage of a ceramic material (12). The ceramic material (6) is transferred from a recipient for ceramic material (14) to a subsystem for dosage of ceramic material (6) by means of a subsystem for transfer of ceramic material (13). The second extrusion injection head (4) is configured to be supplied with a calcium carbonate based support material (7) by means of a subsystem for dosage of calcium carbonate based support material (15) whereby the calcium carbonate based support material (7) is transferred from the recipient for calcium carbonate based support material (17) to the subsystem for dosage of calcium carbonate based support material (15) by means of a subsystem for transfer of calcium carbonate based support material (16). Additionally, a processing and control computer unit (18) processes and controls the additive manufacture instructions by means of a digital model of the ceramic component to be manufactured, to process and control the deposition of a plurality of layers or ceramic material and of a plurality of layers of calcium carbonate based support material, whereby the processing and control computer unit (18) processes and controls the relative movement of the printer table (5) in relation to the subsystem for injection of materials by extrusion (2).

As illustrated in figure 1, the subsystem for transfer of ceramic material (13) and the subsystem for transfer of calcium carbonate based support material (16) include pistons, which are activated by a system for pressurizing and activating of the transfer subsystem (20), which can operate with compressed air.

Preferably, as illustrated in figure 1, a first drive motor of the dosage system (19) activates the dosage subsystem for ceramic material (12) and a second motor (19) activates the dosage subsystem for the calcium carbonate based support material (15). Even more preferably, a drive motor for the dosage subsystem (19) is a servo motor.

As illustrated in figures 2 and 3, the additive manufacture system (1) propitiates the deposition of layers of ceramic materials (8) and layers of calcium carbonate based support material (9), wherein the raw materials are deposited on the printer table (5) by extrusion in automated manner, layer by layer, by means of the subsystem for extrusion injection of materials (2). During the deposition of the layers, the processing and control computer unit (18) processes and controls the instructions of the additive manufacture according to the digital model of a ceramic component to be manufactured, so as to process and control the deposition of a plurality of layers of ceramic material (8) and of a plurality of layers of calcium carbonate based support material (9).

In the preferred embodiments of the present invention, the processing and control computer unit (18) comprises a utilization interface for a user. Even more preferably, the processing and control computer unit (18) comprises means for communication with other computer devices, by means of wired or wireless communication protocols.

The printer table (5) includes an adapted automatic platform change system, provided with movement in the direction along a system of coordinates, for example a cartesian or polar system. The processing and control computer unit (18) processes and controls the relative movement of the printer table (5) in relation to the subsystem for extrusion injection of materials (2).

The present invention can comprise the use and the incorporation in the additive manufacture system (1) of several types of printer tables (5) and three-dimensional printers known from the state of the art, such as those conducted by directions throughout a system of cartesian coordinates, a delta system, a system of polar coordinates or a SCARA system, as represented in figures 8 to 11.

As will be appreciated by a person skilled in the art, the printers and printer tables (5) which operate under a cartesian coordinate system use the cartesian axes X-Y-Z, with the three axes being perpendicular to each other, as illustrated in figure 8. The main advantage lies in the ease of use, since it is the type of printer having the most simple mechanics, being the easiest to be calibrated, apart from the correction of errors that may arise during the use being facilitated.

The Delta printers and printer tables (5) contain a static printer bed and the toolhead is suspended by three arms that move like a pendulum, as illustrated in figure 9. The three arms articulated at different heights move upwards and downwards to execute the work. These printers and printer tables (5) are noted by the quality of the print in higher speeds and by the greater simplicity of the mechanics thereof, however, they are more difficult to calibrate.

The polar printers are based on the polar coordinate system. The printer table (5) spins and the extruder and the toolhead move upwards and downwards, as illustrated in figure 10. The greater advantage is working with just two motors, apart from the motors that are linked to the extruders, which translates into less costs.

The SCARA printers comprise a two-link arm, similar to a human arm, as illustrated in figure 11. The extremity of the second articulation can move along the XY plan, spinning at the base and the elbow of the mechanism. On the other side, the Z movement is executed vertically.

In this manner, in the preferred embodiments of the present invention, the subsystem for extrusion injection of materials (2) and the printer table (5) are connected to a three-dimensional printer selected from the group consisting of a cartesian printer, a delta printer, a polar printer and a SCARA printer.

The subsystem for extrusion injection of materials (2) comprises a first extrusion injection head (3) and a second extrusion injection head (4). In the preferred embodiments of the present invention, the rotary movement of the extrusion injection heads is provided by a servo motor or other electro-mechanic or hydraulic form. In the preferred embodiments of the present invention, a crankshaft transmits the movement of a drive motor of the dosage subsystem (19) in a rotary movement of the first extrusion injection head (3) and of the second extrusion injection head (4).

The first extrusion injection head (3) is supplied with a ceramic material (6) by means of a dosage subsystem for ceramic material (12). The ceramic material (6) is transferred from a recipient for ceramic material (14) to the dosage subsystem for ceramic material (12) by means of a subsystem for transfer of ceramic material (13). As illustrated in figures 2 and 3, the subsystem for dosage of ceramic material (12) includes an extrusion spindle. In the embodiments of the present invention wherein several ceramic materials (6) are used in the manufacture of ceramic objects, a series of recipients for ceramic materials dedicated to each type of material can be aligned in parallel.

The second extrusion injection head (4) is supplied with a calcium carbonate based support material (7) by means of a subsystem for dosage of the calcium carbonate based support material (15). The calcium carbonate based support material (7) is transferred from a recipient for calcium carbonate based support material (17) to the subsystem for dosage of calcium carbonate based support material (15) by means of a subsystem for transfer of calcium carbonate based support material (16). As illustrated in figures 2 and 3, the subsystem of dosage of the calcium carbonate based support material (15) includes an extrusion spindle.

In the preferred embodiments of the present invention, the transfer of the material in the additive manufacture system (1) goes through a pressurizing and drive subsystem of the transfer subsystem (20), which uses compressed air pressure, by means of the internal installation of a building or by means of a compressor, which enters the material recipients (14,17), pushing the materials (6,7) by means of the subsystems for transfer of material (13,16), usually including pistons, until the dosage subsystems (12,15), wherein these operations are controlled by the processing and control computer unit (18), thus passing, finally, the material by the extrusion injection heads (3,4), depositing the material on the printer table (5).

The ceramic material (6) and the calcium carbonate based support material (7) supplied to the subsystem for injection of materials by extrusion (2) can be in the form of pastes or powders.

When the ceramic material (6) and the calcium carbonate based support material (7) are in the form of pastes, the same comprise water, optionally combined with some polar organic solvent, such as ethyl alcohol.

When the ceramic material (6) and the calcium carbonate based support material (7) are in the form of powders, pressurized water steam is preferably incorporated to propitiate the adequate aggregation of the powder particles.

As illustrated in figure 4 the process for additive manufacture of ceramic objects (10) of the present invention exhibits the advantage that the layers of ceramic material (6) and the layers of the calcium carbonate based support material (7), after obtaining the green ceramic object, undergo similar shape changes between the two materials, both in the drying step of the piece, as in the calcination or firing step. With this, the calcium carbonate based support material avoids the deformation of the manufactured piece in the steps of additive manufacture, drying and calcination/firing.

In a surprising manner, as illustrated in figure 5, the calcium carbonate based support material has as its supplementary advantage the self-disaggregation in relation to the ceramic material, after firing and cooling, allowing obtaining the ceramic object (10) completely separate from the calcium carbonate based support material (11).

The ceramic objects (10) produced by means of the device and additive manufacture process of the present invention are characterized by having total freedom regarding geometries and shapes, resulting from the layer by layer deposition of the ceramic materials (6) and the calcium carbonate based support material (7). In this sense, the ceramic materials (6) and the calcium carbonate based support material (7) are presented in viscous state, when supplied in the form of a paste, or in dry state, when supplied in the form of powders, when the referred supplying occurs at room temperature. Further, as will be understood by a person skilled in the art, there can be used several types of ceramic materials (6) which can be of different colors.

The ceramic materials (6) which can be used by the device and in the process for additive manufacture of the present invention are traditional carbonated ceramic materials, usually calcitic and dolomitic, such as for example: red clay, pottery, porous, the semiporous, the semi stoneware, stoneware, porcelain stoneware and porcelain, which are mentioned in decreasing order relative to their plastic properties and in increasing order relative to their hardness. Alternatively, other types of more technical ceramic materials are capable of being materialized by means of the additive manufacture, such as for example the special or engineering ceramics, particularly the aerospace ceramics, the bio-ceramics and the refractories.

The calcium carbonate based support materials (7) can be used by the device and in the process of additive manufacture of the present invention together with the ceramic material (6).

In the preferred embodiments of the present invention, the ceramic material (6) is selected from one or more of the group consisting of red clay, pottery, porous, semiporous, semi stoneware, stoneware, porcelain stoneware and porcelain.

The additive manufacture process of the present invention requires at least one step of drying of the green ceramic object and at least one calcination or firing step, whereby during these steps, the ceramic materials (6) and the calcium carbonate based support material (7) behave in a similar manner, when submitted to temperatures, such as the temperatures used in the calcination or firing steps. On the other hand, the behavior of the ceramic materials and of the calcium carbonate based support material (7) in the step of cooling of the calcined ceramic object is substantially different, having as a final result a disaggregation of the support material comprised of calcium carbonate based ceramic material.

The calcium carbonate based support material (7) can originate from the residues produced in the industry of transformation of the natural stone. In this sense, there must be noted the slurries, which result primarily from the cutting, polishing and finishing operations of the natural stone. These processes originate extremely fine stone particles which are mixed with water. The particles and the water form a fluid mixture which is guided to a decanter which has the purpose of separating the solid particles, sedimented with help of flocculants, while the water is once again reintroduced in the machine circuit. The resulting slurries are compressed in a filter press, where there occurs the reduction of the volume and the humidity content. These pressed slurries are usually deposited in landfills located in the surroundings of the extraction/transformation units. This routine has generated a large volume of slurries deposited in landfills, occupying large areas and at times being located in environmentally sensitive areas. Although this type of residue is inert, the uncontrolled or incorrectly planned deposition thereof can be at the cause of accidents and cause severe environmental impacts, as well as the increase which has been observed in slurry landfills, leading to considerable landscape impacts.

In this manner, in the present invention there can be used as calcium carbonate based support materials (7) the calcium carbonate in its natural form, the calcium carbonate in its precipitated form and the minerals that have significant amounts of calcium carbonate, such as the limestones, calcites, the aragonites, chalk, the marble and the stone gypsum. The precipitated calcium carbonate can be obtained by the reaction of a solution of calcium carbonate, or by the passage of carbon dioxide through a calcium hydroxide suspension.

Alternatively to the calcium carbonate sources mentioned above, there can also be used as calcium carbonate based support materials (7) the residues from the process of extraction and transformation of the natural stone, which contain around 40 to 98% of calcium carbonate, around 10 to 20% of silica, around 10 to 18% of magnesium oxide, around 2% of aluminum trioxide plus ferrous oxide and clay minerals, around 1% potassium oxide plus sodium oxide, and less than 1% of other residues associated to the processing of extraction and transformation of the natural stone.

In the preferred modes of embodiment of the present invention, the calcium carbonate based support material (7) is selected from one or more of the group consisting of calcium carbonate in natural form, calcium carbonate in its precipitate form, limestones, calcites, aragonites, chalk, marble, stone gypsum and residues from the process of extraction and transformation of the natural stone including at least 30% calcium carbonate.

In the preferred embodiments of the present invention, the calcium carbonate based support material (7) comprises at least 30% calcium carbonate.

In the preferred embodiments of the additive manufacture process of the present invention, in the supply step of a second extrusion injection head (4), with calcium carbonate based support material (7) there can be added to the calcium carbonate based support material (7) a certain amount of ceramic material (6), for example in the interval from 1 to 70 % mass percentage in relation to the total mass supplied to the second extrusion injection head (4), to allow accompanying the change in shape between the two materials, during the drying step of the green ceramic object or in the calcination or firing step of the dry ceramic object. For molding the pieces represented in figures 6 and 7, a second extrusion injection head (4), which includes the calcium carbonate based support material (7), was supplied with a mixture of 80% of residues originating from the extraction and transformation of the natural stone based on calcium carbonate and 20% of ceramic material (6), also used in the first extrusion injection head (3).

In the preferred embodiments of the present invention, the step of deposition of a plurality of layers of ceramic material (8) and of a plurality of layers of calcium carbonate based support material (9) so as to form a green ceramic object, takes place under pressure in the interval of 300 kPa (3 bar) to 700 kPa (7 bar).

The drying step of the green ceramic object is an extremely important step since the ceramic objects cannot contain significant amounts of water in the moment when they are sent to the calcination or firing steps in ovens.

In some embodiments of the present invention, the drying step of the green ceramic object is executed in the interval from 10 to 80 °C. Preferably, the drying step of the green ceramic object is executed at room temperature, for example in the interval from 10 to 40 °C, even more preferably from 15 to 25 °C.

The drying time of a green ceramic object typically varies between 4 hours to 3 days, whereby the specificities of thickness and size of the referred object must be considered, as will be understood by a person skilled in the art. In the embodiments where the green ceramic object dries at room temperature, the drying times vary according to the existing weather conditions during the drying, including the influence of the local humidity.

The calcination or firing step is also extremely important, since it allows the hardening and glazing of the dry ceramic object, since, without this step, the pieces remained in green state, wherein the green state represents the state where the ceramic material is still able to dissolve with water. Both in the drying step as in the calcination or firing step, the ceramic material suffers contractions, allowing that the calcium carbonate based support material help in maintaining the stability both in the act of printing of the object, that is in the step of deposition of a plurality of layers of ceramic material (8) and of a plurality of layers of calcium carbonate based support material (9) to form a green ceramic object, as in the step of calcination or firing.

Preferably, the step of calcination or firing of the dry ceramic object occurs in three distinct levels. In the level that is recognized as the quartz inversion, wherein this phase occurs at around 573°C, the quartz crystals go from the alpha phase to the beta phase. Consequently, the ceramic paste does not dissolve any more in water, going from raw material to hardened ceramic. The second phase of the calcination or firing, is called Bisque or *Biscuit,* where the ceramic body undergoes irreversible structural changes, which make it adequate for handling. Until this phase is reached, as the temperature rises, the chemically combined water, the organic materials, the magnesium, the sulphur, as well as the calcium, limestone, calcite compounds among other carbonates, are fired. The third calcination or firing phase is called *Glaze Firing* or burning maturation, whereby in this phase the glaze transformation takes place, allowing that the piece is not so brittle as in the Bisque or *Biscuit* phase. This phase can be carried out together with the glaze cooking, that is, if, it is intended that the ceramic piece be glazed. To minimize unnecessary costs with energy, there can occur two calcinations/firings, one until reaching the maximum Bisque or *Biscuit* temperature (between 985°C and 1038°C) and the other until reaching the *Glaze Firing* or burning maturation temperature, whereby this temperature is defined according to the properties of each type of ceramic material used. Preferably, when two calcinations take place, it is necessary to cool the pieces until room temperature between the referred two calcinations.

In the preferred embodiments of the present invention, the calcination or firing step of the dry ceramic object is executed in the interval from 10 to 1500 °C.

In the preferred embodiments of the present invention, the calcination or firing can represent variable heating temperatures according to the temperature values reached during the heating and the interest in carrying out the Bisque or *Biscuit* phases and the *Glaze Firing* or burning maturation.

In a first embodiment of the invention, where it is desired to carry out the Bisque or Biscuit phase, the calcination or firing temperature can be raised to a first heating rate from 12 to 20 °C/h until reaching around 93 °C; in a second heating rate from 8 to 16 °C/h until reaching around 104 °C; in a third rate from 12 to 22 °C/h until reaching around 510 °C; in a fourth rate from 23 to 31 °C/h until reaching around 621 °C; and in a fifth rate from 39 to 47 °C/h until reaching around 1030 °C. Preferably, the calcination temperature can be raised in a first heating level of 16°C/h until reaching around 93 °C; in a second rage of 12°C/h until reaching around 104 °C; in a third rate of 18°C/h until reaching around 510 °C; in a fourth rate of 27 °C/h until reaching around 621 °C; and in a fifth rate 43 °C/h until reaching around 1030 °C.

In a second embodiment of heating rates of the calcination or firing step, where it is desired to carry out both the Bisque or *biscuit* and *Glaze Firing* steps or burning maturation, the calcination temperature can be raised in a first heating rate from 23 to 31 °C/h until reaching around 93°C; in a second rate from 8 to 16 °C/h until reaching around 104 °C; in a third rate from 28 to 36 °C/h until reaching around 621 °C, in order to carry out the bisque or *biscuit* phase; and in a fourth rate from 48 to 56 °C/h until reaching the maximum calcination temperature for the specific ceramic material (6), so as to carry out the *Glaze Firing* step or burning maturation, as understood by those skilled in the art. Preferably, the calcination temperature can be raised in a first rate 27 °C/h until reaching around 93 °C; in a second rate of 12 °C/h until reaching around 104 °C; in a third rate of 32 °C/h until reaching around 621 °C, to carry out the bisque or *biscuit* phase; and in a fourth rate of 52 °C/h until reaching the maximum calcination temperature for the specific ceramic material (6), to carry out the *Glaze Firing* phase or burning maturation.

In a third embodiment of the calcination or firing step, where it is desired to carry out both the bisque or *biscuit* and *Glaze Firing* or burning maturation steps, it is also possible to apply the following heating curve for the calcination or firing step: in a first room temperature heating ramp until around 500 °C for around 3 to 5 hours, remaining on the level of around 500 °C for approximately 30 minutes to 2 hours; in a second heating ramp of around 500 °C until around 700 °C for around 2 to 4 hours, remaining at the level around 700 °C for 30 minutes to 2 hours; in a third heating ramp from around 700 °C until the maximum calcination temperature for the specific ceramic material (6) for around 3 to 5 hours, remaining at the level of the referred maximum calcination temperature for approximately 15 minutes to 1 hour.

In other embodiments of the present invention there can be used hothouse and shuttle kiln combinations for executing the calcination or firing step, being carried out both the bisque or *biscuit* and *Glaze Firing* or burning maturation phases. In this case, a dry ceramic object is forwarded to the hothouse, which heats the ceramic object until the interval from 100 to 200 °C, where as soon as this temperature is reached, the object is directed to the shuttle kiln and heated at a rate from 28 to 36 °C/h until reaching around 621 °C, to carry out the bisque or biscuit phase; and at a subsequent rate from 48 to 56 °C/h until reaching the maximum calcination temperature for the specific ceramic material (6), remaining at that level for 1 to 15 minutes, preferably 5 minutes, to carry out the *Glaze Firing* or burning maturation phase. As soon as the maximum temperature is reached, the cooling phase begins, whereby in the terminal portion of the shuttle kiln, the calcined ceramic object is already at around 200 °C. In the industry, considering the utilization of shuttle kilns, it takes from 8 to 16 hours to execute the calcination or firing and cooling steps.

In the cooling step of the calcined/fired ceramic object, there is a behavior change between the ceramic material and the calcium carbonate based support material. As regards the calcium carbonate based support material (7), for example, the limestone, the calcite among other carbonates, in the calcination or firing step, when advancing to the second step (bisque or biscuit), around 600 °C, the calcium carbonate burns, transforming itself into lime. Subsequently succeeding, at the end of the calcination or firing and cooling of the piece, the support material no longer has the structural capacity to aggregate itself. As illustrated in figure 6, in the cooling step, when the temperature reaches around 200 °C (in which phase there is no danger in removing the pieces from the kiln), this support material, while hot, is attached to the ceramic object. However, when room temperature is reached, the lime falls apart, resulting in the self-disaggregation of the calcium carbonate based support (11) and consequent self-separation of the ceramic object (10) as illustrated in figure 7.

In the preferred embodiments of the present invention, the cooling step of the calcined ceramic object is executed in the interval from 1500 to 10 °C.

In this manner, after the calcination or firing step, the cooling of the kiln program is initiated, by means of the shutting down of the heating source thereof, for example the resistances, lowering the temperature until room temperature. Typically, the cooling step can take from around 4 to 12 hours, and this value is observed in closed and electric kilns. As will be appreciated by a person skilled in the art, for an estimate of the cooling time there must be considered variables related to the size of the kiln, since the larger the kiln, the slower is the cooling thereof and variables related to the types of kilns.

As used in this description, the expressions "around" and "approximately" refer to an interval of values of more or less 10% of the number specified.

As used in this description, the expression "substantially" means that the real value is within the interval of around 10% of the desired value, variable or related limit, particularly within around 5% of the desired value, variable or related limit or specially within the 1% of the desired value, variable or related limit.

The subject matter described above is provided as an illustration of the present invention and, therefore, cannot be interpreted so as to limit it. The terminology used herein with the purpose of describing preferred embodiments of the present invention, must not be interpreted to limit the invention. As used in the specification, the definite and indefinite articles, in their singular form, aim at the interpretation of also including the plural forms, unless the context of the description indicates, explicitly, the contrary. It will be understood that the expressions "comprise" and "include", when used in this description, specify the presence of the characteristics, the elements, the components, the steps and the related operations, however, they do not exclude the possibility of other characteristics, elements, components, steps and operations also being contemplated.

All the alterations, providing that they do not modify the essential characteristics of the claims that follow, must be considered as being within the scope of protection of the present invention.

### REFERENCE SIGNS LIST

1. An additive manufacture system
2. A subsystem for extrusion injection of materials
3. A first extrusion injection head
4. A second extrusion injection head
5. A printer table
6. A ceramic material
7. A calcium carbonate based support material
8. A layer of ceramic material
9. A layer of calcium carbonate based support material
10. A ceramic object
11. A calcium carbonate based support
12. A subsystem for dosage of a ceramic material
13. A subsystem for transfer of ceramic material
14. A recipient for ceramic material
15. A subsystem for dosage of calcium carbonate based support material
16. A subsystem for transfer of calcium carbonate based support material
17. A recipient for calcium carbonate based support material
18. A processing and control computer unit
19. A drive motor of the dosage subsystem
20. A subsystem for pressurization and activation of the transfer subsystem

### LIST OF CITATIONS

Follows the list of citations:

### PATENT LITERATURE

US10059031B1, of Benjamin Demuth and Adam Pawloski, published on August 28, 2018;
Chinese patent application CN109016070A, of Zhao et al, published on December 18, 2018;
North-American patent application US 2002/167101 A1, of Tochimoto Shigeaki et al, published on November 14, 2002;
European patent application EP 3156231 A1, of Okamoto Eiji et al, published on April 19, 2017;
North-American patent US 10894289 B2, of Ishida Masaya et al, published on January 19, 2021.

**NON-PATENT LITERATURE**

## Claims

1. An additive manufacture process for a ceramic object (10), **characterized by** using an additive manufacture system (1), wherein said additive manufacture system (1) is configured for the manufacture of ceramic components accompanied by supports comprising a plurality of recipients for extrusion materials (14, 17), subsystems for transfer of materials for extrusion (13,16), subsystems for dosage of materials for extrusion (12,15), a subsystem for extrusion injection of materials (2), a printer table (5) and a processing and control computer unit (18); and wherein
the subsystem for extrusion injection of materials (2) comprises a first extrusion injection head (3) and a second extrusion injection head (4); and
wherein the first extrusion injection head (3) is configured to be supplied with at least one ceramic material (6) by means of a subsystem for dosage of ceramic material (12); wherein the ceramic material (6) is transferred from a recipient for ceramic material (14) to the subsystem for dosage of ceramic material (12) by means of a subsystem for transfer of ceramic material (13); and
wherein the second extrusion injection head (4) is configured to be supplied with a calcium carbonate based support material (7) by means of the subsystem for dosage of calcium carbonate based support material (15); and
wherein the calcium carbonate based support material (7) is transferred from a recipient for calcium carbonate based support material (17) to a subsystem for dosage of calcium carbonate based support (15) by means of a subsystem for transfer of calcium carbonate based support material (16); and
wherein the processing and control computer unit (18) processes and controls the additive manufacture instructions according to a digital model of a ceramic component to be manufactured, to process and control the deposition of a plurality of ceramic material layers (8) and of a plurality of layers of calcium carbonate based support material (9); and
wherein the processing and control computer unit (18) processes and controls the relative movement of the printer table (5) in relation to the subsystem for extrusion injection of materials (2);
and by said additive manufacture process for a ceramic object (10) comprising the following steps:
i. Feeding of a first extrusion injection head (3) with at least one ceramic material (6);
ii. Feeding of a second extrusion injection head (4) with a calcium carbonate based support material (7);
iii. Deposition of a plurality of layers of ceramic material (8) and of a plurality of layers of calcium carbonate based support material (9) to form a green ceramic obj ect;
iv. Drying of the green ceramic object;
v. Calcination or firing of the dry ceramic object, provided that the step of calcination or firing of the dry ceramic object occurs in three levels, wherein the first level is a quartz inversion which occurs at around 573 °C and the quartz crystals go from the alpha phase to the beta phase, and wherein the second level is a Bisque or Biscuit phase, which occurs at a maximum temperature between 985 °C and 1038 °C, and wherein the third level is a Glaze Firing or burning maturation, whereby in this level the glaze transformation takes place;
vi. Cooling of the calcined or cooked ceramic object with the self-separation of the ceramic object (10) and of the calcium carbonate based support material (11).

2. The additive manufacture process for a ceramic object (10), according to the previous claim, **characterized by** the ceramic material (6) being selected from one or more of the group consisting of red clay, pottery, porous, semiporous, semi-stoneware, stoneware, porcelain stoneware and porcelain.

3. The additive manufacture process for a ceramic object (10), according to any one of the claims 1 or 2, **characterized by** the calcium carbonate based support material (7) being selected from one or more of the group consisting of calcium carbonate in natural form, calcium carbonate in its precipitated form, limestones, calcites, aragonites, chalk, marble, stone gypsum and residues from the process of extraction and transformation of the natural stone including at least 30% calcium carbonate.

4. The additive manufacture process for a ceramic object (10), according to any one of claims 1 to 3, **characterized by** the calcium carbonate based support material (7) comprising at least 30% calcium carbonate.

5. The additive manufacture process for a ceramic object (10), according to any one of claims 1 to 4, **characterized by** the drying step of the green ceramic object being carried out in the interval from 10 to 40 °C.

6. The additive manufacture process for a ceramic object (10), according to any one of claims 1 to 5, **characterized by** the calcination or firing step of the dry ceramic object being executed in the interval from 10 to 1500 °C.

7. The additive manufacture process for a ceramic object (10), according to any one of claims 1 to 6, **characterized by** the cooling step of the calcined ceramic object being executed in the interval from 1500 to 10 °C.

## Patentansprüche

1. Ein additives Fertigungsverfahren für ein keramisches Objekt (10), **dadurch gekennzeichnet, dass** die Verwendung eines additiven Fertigungssystems (1), wobei das additive Fertigungssystem (1) für die Fertigung von keramischen Komponenten konfiguriert ist, begleitet von Trägern, umfassend eine Vielzahl von Behältern für Extrusionsmaterialien (14, 17), Subsysteme zur Übertragung von Extrusionsmaterialien (13, 16), Subsystemen zur Dosierung von Extrusionsmaterialien (12, 15), ein Subsystem zur Extrusionsspritzgießen von Materialien (2), einem Druckertisch (5) und einer Verarbeitungs- und Steuercomputereinheit (18) umfasst; und wobei
das Subsystem zum Extrusionsspritzgießen von Materialien (2) einen ersten Extrusionsspritzgießkopf (3) und einen zweiten Extrusionsspritzgießkopf (4) umfasst; und
wobei der erste Extrusionsspritzgießkopf (3) so konfiguriert ist, dass er mittels eines Subsystems zum Dosieren von keramischem Material (12) mit mindestens einem keramischen Material (6) versorgt wird;
wobei das keramische Material (6) von einem Behälter für keramisches Material (14) zu dem Subsystem zur Dosierung von keramischem Material (12) mittels eines Subsystems zur Übertragung von keramischem Material (13) übertragen wird; und
wobei der zweite Extrusionsspritzgießkopf (4) so konfiguriert ist, dass er mit einem Trägermaterial (7) basierend auf Calciumcarbonat mittels des Subsystems zur Dosierung von Trägermaterial (15) basierend auf Calciumcarbonat versorgt wird; und
wobei das Trägermaterial basierend auf Calciumcarbonat (7) von einem Behälter für Trägermaterial basierend auf Calciumcarbonat (17) zu einem Subsystem zur Dosierung von Trägermaterial basierend auf Calciumcarbonat (15) mittels eines Subsystems zur Übertragung von Trägermaterial basierend auf Calciumcarbonat (16) übertragen wird; und
wobei die Verarbeitungs- und Steuercomputereinheit (18) die Anweisungen für die additive Fertigung gemäß einem digitalen Modell einer herzustellenden keramischen Komponente verarbeitet und steuert, um die Ablagerung einer Vielzahl von Schichten aus keramischem Material (8) und einer Vielzahl von Schichten aus Trägermaterial basierend auf Calciumcarbonat (9) zu verarbeiten und zu steuern; und
wobei die Verarbeitungs- und Steuercomputereinheit (18) die relative Bewegung des Druckertisches (5) in Bezug auf das Subsystem zum Extrusionsspritzgießen von Materialien (2) verarbeitet und steuert;
und **dass** das genannte additive Fertigungsverfahren für ein Keramikobjekt (10) die folgenden Schritte umfasst:
i. Beschicken eines ersten Extrusionsspritzgießkopfs (3) mit mindestens einem keramischen Material (6);
ii. Beschicken eines zweiten Extrusionsspritzgießkopfs (4) mit einem Trägermaterial basierend auf Calciumcarbonat (7);
iii. Abscheiden einer Vielzahl von Schichten aus keramischem Material (8) und einer Vielzahl von Schichten aus Trägermaterial basierend auf Calciumcarbonat (9), um ein grünes keramisches Objekt zu bilden;
iv. Trocknen des grünen keramischen Objekts;
v. Kalzinieren oder Brennen des trockenen keramischen Objekts, vorausgesetzt, dass der Schritt des Kalzinierens oder Brennens des trockenen keramischen Objekts in drei Stufen erfolgt, wobei die erste Stufe eine Quarzinversion ist, die bei etwa 573 °C erfolgt und die Quarzkristalle von der Alpha-Phase in die Beta-Phase übergehen, und wobei die zweite Stufe eine Bisque- oder Biskuit-Phase ist, die bei einer Maximaltemperatur zwischen 985 °C und 1038 °C auftritt, und wobei die dritte Stufe ein Glasurbrand oder eine Brennreifung ist, wobei in dieser Stufe die Glasumwandlung stattfindet;
vi. Abkühlen des kalzinierten oder gebrannten keramischen Objekts mit der Selbsttrennung des keramischen Objekts (10) und des Trägermaterials (11) basierend auf Calciumcarbonat.

2. Das additive Fertigungsverfahren für ein keramisches Objekt (10) gemäß dem vorherigen Anspruch, **dadurch gekennzeichnet, dass** das keramische Material (6) aus einem oder mehreren der Gruppe ausgewählt ist, der aus rotem Ton, Keramik, porös, halbporös, Halbsteinzeug, Steinzeug, Feinsteinzeug und Porzellan.

3. Das additive Fertigungsverfahren für ein keramisches Objekt (10) gemäß einem der Ansprüche 1 oder 2, **dadurch gekennzeichnet, dass** das basierend auf Calciumcarbonat Trägermaterial (7) aus einem oder mehreren der Gruppe ausgewählt ist, der aus Calciumcarbonat in natürlicher Form, Calciumcarbonat in seiner gefällten Form, Kalksteinen, Calcit, Aragonit, Kreide, Marmor, Steingips und Rückständen aus dem Prozess der Gewinnung und Umwandlung des Natursteins, die mindestens 30 % Calciumcarbonat beinhalten, besteht, ausgewählt ist.

4. Das additive Fertigungsverfahren für ein keramisches Objekt (10) gemäß einem der Ansprüche 1 bis 3, **dadurch gekennzeichnet, dass** das Trägermaterial (7) basierend auf Calciumcarbonat mindestens 30 % Calciumcarbonat umfasst.

5. Das additive Fertigungsverfahren für ein keramisches Objekt (10) gemäß einem der Ansprüche 1 bis 4, **dadurch gekennzeichnet, dass** der Trocknungsschritt des grünen keramischen Objekts im Intervall von 10 bis 40 °C durchgeführt wird.

6. Das additive Fertigungsverfahren für ein keramisches Objekt (10) gemäß einem der Ansprüche 1 bis 5, **dadurch gekennzeichnet, dass** der Kalzinierungs- oder Brennschritt des trockenen keramischen Objekts im Intervall von 10 bis 1500 °C ausgeführt wird.

7. Das additive Fertigungsverfahren für ein keramisches Objekt (10) gemäß einem der Ansprüche 1 bis 6, **dadurch gekennzeichnet, dass** der Abkühlungsschritt des kalzinierten keramischen Objekts im Intervall von 1500 bis 10 °C durchgeführt wird.

## Revendications

1. Un processus de fabrication additive pour un objet en céramique (10), **caractérisé par** l'utilisation d'un système de fabrication additive (1), dans lequel ledit système de fabrication additive (1) est configuré pour la fabrication de composants en céramique accompagnés de supports comprenant une pluralité de récipients pour matériaux d'extrusion (14, 17), des sous-systèmes pour le transfert de matériaux pour l'extrusion (13, 16), des sous-systèmes pour le dosage de matériaux pour l'extrusion (12, 15), un sous-système pour injection par extrusion de matériaux (2), une table d'impression (5) et une unité informatique de traitement et de commande (18) ; et dans lequel
le sous-système d'injection par extrusion de matériaux (2) comprend une première tête d'injection par extrusion (3) et une seconde tête d'injection par extrusion (4) ; et dans lequel la première tête d'injection par extrusion (3) est configurée pour être alimentée avec au moins un matériau en céramique (6) au moyen d'un sous-système pour le dosage de matériau en céramique (12) ;
dans lequel le matériau en céramique (6) est transféré à partir d'un récipient pour matériau en céramique (14) au sous-système pour le dosage de matériau en céramique (12) au moyen d'un sous-système pour le transfert de matériau en céramique (13) ; et
dans lequel la seconde tête d'injection par extrusion (4) est configurée pour être alimentée avec un matériau de support à base de carbonate de calcium (7) au moyen du sous-système pour le dosage de matériau de support à base de carbonate de calcium (15) ; et
dans lequel le matériau de support à base de carbonate de calcium (7) est transféré à partir d'un récipient pour matériau de support à base de carbonate de calcium (17) à un sous-système pour le dosage de support à base de carbonate de calcium (15) au moyen d'un sous-système pour le transfert de matériau de support à base de carbonate de calcium (16) ; et
dans lequel l'unité informatique de traitement et de commande (18) traite et commande les instructions de fabrication additive selon un modèle numérique d'un composant en céramique à fabriquer, pour traiter et commander le dépôt d'une pluralité de couches de matériau en céramique (8) et d'une pluralité de couches de matériau de support à base de carbonate de calcium (9) ; et
dans lequel l'unité informatique de traitement et de commande (18) traite et commande le mouvement relatif de la table d'impression (5) par rapport au sous-système d'injection par extrusion de matériaux (2) ;
et par ledit processus de fabrication additive pour un objet en céramique (10) comprenant les étapes suivantes :
i. L'alimentation d'une première tête d'injection par extrusion (3) avec au moins un matériau en céramique (6) ;
ii. L'alimentation d'une seconde tête d'injection par extrusion (4) avec un matériau de support à base de carbonate de calcium (7) ;
iii. Le dépôt d'une pluralité de couches de matériau en céramique (8) et d'une pluralité de couches de matériau de support à base de carbonate de calcium (9) pour former un objet en céramique verte ;
iv. Le séchage de l'objet en céramique verte ;
v. La calcination ou la cuisson de l'objet en céramique sèche, à condition que l'étape de calcination ou de cuisson de l'objet en céramique sèche se produise en trois niveaux, dans lesquels le premier niveau est une inversion de quartz qui se produit à environ 573 °C et les cristaux de quartz passent de la phase alpha à la phase bêta, et dans lequel le deuxième niveau est une phase de biscuit, qui se produit à une température maximale comprise entre 985 °C et 1038 °C, et dans lequel le troisième niveau est une cuisson de glaçure ou une maturation par cuisson, moyennant quoi la transformation de la glaçure a lieu à ce niveau ;
vi. Le refroidissement de l'objet en céramique calciné ou cuit avec l'auto-séparation de l'objet en céramique (10) et du matériau de support à base de carbonate de calcium (11).

2. Le processus de fabrication additive pour un objet en céramique (10), selon la revendication précédente, **caractérisé en ce que** le matériau céramique (6) est choisi parmi un ou plusieurs éléments du groupe constitué d'argile rouge, poterie, poreux, semiporeux, semi-grès, grès, grès cérame et porcelaine.

3. Le processus de fabrication additive pour un objet en céramique (10), selon l'une quelconque des revendications 1 ou 2, **caractérisé en ce que** le matériau de support à base de carbonate de calcium (7) est choisi parmi un ou plusieurs éléments du groupe constitué de carbonate de calcium sous forme naturelle, carbonate de calcium sous sa forme précipitée, calcaires, calcites, aragonites, craie, marbre, gypse de pierre et résidus provenant du processus d'extraction et de transformation de la pierre naturelle comportant au moins 30 % de carbonate de calcium.

4. Le processus de fabrication additive pour un objet en céramique (10) selon l'une quelconque des revendications 1 à 3, **caractérisé en ce que** le matériau de support à base de carbonate de calcium (7) comprend au moins 30 % de carbonate de calcium.

5. Le processus de fabrication additive pour un objet en céramique (10) selon l'une quelconque des revendications 1 à 4, **caractérisé en ce que** l'étape de séchage de l'objet en céramique verte est réalisée dans l'intervalle de 10 à 40 °C.

6. Le processus de fabrication additive pour un objet en céramique (10) selon l'une quelconque des revendications 1 à 5, **caractérisé en ce que** l'étape de calcination ou de cuisson de l'objet en céramique sèche est exécutée dans l'intervalle de 10 à 1500 °C.

7. Le processus de fabrication additive d'un objet en céramique (10) selon l'une quelconque des revendications 1 à 6, **caractérisé en ce que** l'étape de refroidissement de l'objet en céramique calcinée est réalisée dans l'intervalle de 1500 à 10 °C.
